# FASCICULE DE BREVET EUROPEEN

(11) **EP 1 718 957 B1**
(45) Date de publication et mention de la délivrance du brevet: **30.05.2007**
(21) Numéro de dépôt: 05728068.7
(22) Date de dépôt: 21.02.2005
(51) Int. Cl.: G01N 21/952, G01B 11/24, B23K 9/095

(54) **PROCEDE ET DISPOSITIF DE CONTROLE PAR OMBROSCOPIE**
VERFAHREN UND VORRICHTUNG ZUR STEUERUNG MITTELS SCHATTENAUFNAHMEVERFAHREN
METHOD AND DEVICE FOR CONTROL BY SHADOWGRAPHY

(30) Priorité: 23.02.2004 FR 0450331
(43) Date de publication de la demande: 08.11.2006
(73) Titulaire: COMMISSARIAT A L'ENERGIE ATOMIQUE, 75015 Paris (FR); COMPAGNIE GENERALE DES MATIERES NUCLEAIRES (COGEMA), 78140 Velizy-Villacoublay (FR)
(72) Inventeur: CHAGNOT, Christophe, F-78140 VELIZY (FR)
(74) Mandataire: Poulin, Gérard
(86) Numéro de dépôt international: PCT/FR2005/050107
(87) Numéro de publication internationale: WO 2005/085814

(56) Documents cités:
- PATENT ABSTRACTS OF JAPAN vol. 1999, no. 01, 29 janvier 1999 (1999-01-29) & JP 10 288588 A (ISHIKAWAJIMA HARIMA HEAVY IND CO LTD), 27 octobre 1998 (1998-10-27)
- CHAGNOT C ET AL: "VISION DE LA SCENE DE SOUDAGE ET TRAITEMENT D'IMAGE EN SOUDAGE TIG" SOUDAGE ET TECHNIQUES CONNEXES, PUBLICATIONS DU SOUDAGE ET DE SES APPLICATIONS, FR, vol. 52, no. 5/6, 1 mai 1998 (1998-05-01), pages 3-7, XP000779969 ISSN: 0246-0963
- ALLEMAND C D ET AL: "A method of filming metal transfer in welding arcs" WELDING JOURNAL, janvier 1985 (1985-01), pages 45-47, XP009031097 cité dans la demande

## Description

Le domaine de cette invention est le contrôle en métrologie, et ses sujets sont un procédé et un dispositif d'ombroscopie qui peuvent être appliqués à des raccords de pièces, par exemple de tubes mis bout à bout. D'autres applications sont parfaitement possibles.

Les contrôles entrepris peuvent précéder un travail d'usinage et avoir pour but de vérifier les positions des pièces observées, ou être entrepris pendant le travail afin de vérifier la bonne position de l'outil et la qualité du travail, par exemple d'après l'aspect d'un cordon de soudure.

Une technique connue de contrôle métrologique d'une surface sans contact matériel avec celle-ci consiste à projeter un faisceau plan de laser vers la surface et à relever la position de la ligne d'intersection d'après celle qu'on recueille sur l'image d'une caméra. Ce procédé très répandu est cependant soumis à quelques limitations, notamment aux procédés de soudage où une lumière importante est produite par le bain de fusion, qui peut rendre indistincte celle du laser. Des difficultés apparaissent encore pour relever des surfaces en creux, à cause de reflets entre les parois et de variations de densité de rayons réfléchis.

Une autre technique consiste à renoncer à un éclairage autonome de la scène à contrôler et à utiliser la lumière produite par le bain de fusion pour reconnaître l'image de la scène. Elle est évidemment limitée aux procédés de soudage. La qualité des résultats dépend de la nature des pièces et des paramètres du procédé, qui doivent aussi rester relativement constants. Le choix des conditions d'observation est souvent délicat, voire impossible pour obtenir de bons résultats. Dans ces deux techniques connues, l'inconvénient est la lumière trop importante produite par le bain de fusion, mais surtout par le plasma (ou la flamme) induit par le procédé, ou encore produite par les outillages portés à haute température par la source de chaleur : par exemple pointe de l'électrode pour le procédé de soudage TIG (tungsten inert pas), extrémité du fil fusible ou de la baguette pour les procédés MIG (metal inert gas), MAG (metal active gas), ou à l'électrode enrobée, ainsi que les buses en céramique portées au rouge assurant une amenée de gaz de protection).

L'invention appartient à une autre technique, dite d'ombroscopie, où un éclairage autonome de la scène contrôlée est fourni et où le relief de la scène observée est déduit des ombres produites par la lumière autonome sur l'image enregistrée par la caméra. La lumière est alors projetée dans une direction sensiblement tangente à la surface à contrôler. Cette technique peut être appliquée à l'observation d'objets opaques entourés d'une source très lumineuse, comme le plasma d'arc qui aveugle les détecteurs et interdit une observation directe. Le procédé permettra notamment, dans le cas de procédés de soudage, de rechargement en matière d'apport d'un joint soudé et en découpage, de reconnaître les formes et les positions des pièces à leur jonction, la position de l'outil, l'aspect du cordon de soudure et notamment la quantité de matière déposée, la qualité du mouillage, la régularité et les caractéristiques du dépôt de matière (position latérale, angle de pénétration, dimension et fréquence des gouttes, etc.). Des corrections du procédé pourront être apportées aussitôt que les défauts auront été constatés.

Les fondements de l'ombroscopie sont décrits dans un article d'Allemande et al., paru dans le "Welding Journal" de janvier 1985 et intitulé « A method of filming metal transfer in welding arcs ».

JP 10 288588 A décrit un dispositif d'inspection de soudures comprenant un organe de support, un émetteur de lumière, un récepteur de la lumière de l'émetteur, un bras à deux extrémités opposées duquel l'émetteur et le récepteur sont montés, et une articulation simple par laquelle le bras est monté sur le support, l'articulation comprenant un axe de rotation perpendiculaire à un trajet principal de la lumière entre l'émetteur et le récepteur.

Un aspect de l'invention sera de créer un dispositif d'ombroscopie au laser ou à une autre source de lumière telle qu'une diode électroluminescente; qui soit utilisable dans des conditions particulières d'assemblage et notamment pour saisir des reliefs creux prononcés, en des conditions de soudage dans un chanfrein, par exemple.

Une forme générale du dispositif de contrôle comprend un support, une source de lumière, un récepteur de la lumière de la source et un bras à deux extrémités opposées duquel la source et le récepteur sont montés, caractérisé en ce qu'il comprend encore une articulation double et réglable par laquelle le bras est monté sur le support, l'articulation double comprenant deux axes de rotation sensiblement perpendiculaires entre eux et à un trajet principal de la lumière entre la source et le récepteur. On verra que cet agencement se prête à des contrôles commodes de surfaces en relief.

Un organe de support d'un outil, effectuant un travail contrôlé par le dispositif, peut être monté sur le support. L'outil accompagne alors le dispositif de contrôle, ce qui est opportun dans bien des procédés.

Le bras peut être courbe entre les extrémités, de façon à bien dégager la scène à observer, et la source et le récepteur peuvent être munis de dispositifs de renvoi d'angle pour la lumière et disposés parallèlement l'un à l'autre, et perpendiculairement au trajet principal de la lumière, ce qui réduit l'encombrement du dispositif. Un autre genre de perfectionnement qu'on peut apporter au dispositif consisterait en ce que, la lumière étant monochromatique, le récepteur comprendrait un filtre transparent à la lumière et opaque à d'autres longueurs d'ondes lumineuses, une lentille convergente, et un sténopé placé à un foyer de la lumière créé par la lentille. Il serait formé à la fois un filtre passe-bande et un filtre spatial dont l'intérêt commun serait d'effacer l'influence de la lumière ambiante produite, par exemple, par le bain de fusion.

Un autre aspect de l'invention est un procédé de contrôle d'une scène effectué avec le dispositif précédent ; il consiste à placer le dispositif de manière que le trajet principal de la lumière soit tangent à la scène à contrôler, et à ajuster le bras en orientation par des réglages de l'articulation double. L'appréhension des reliefs est en effet faussée par une mauvaise orientation du dispositif d'ombroscopie ; l'invention se prête à des corrections faciles de cette orientation, d'après des critères simples dont les exemples seront donnés plus loin.

Une application importante concerne les jonctions circulaires, notamment en relief, de tubes alignés, les tubes étant orientés parallèlement à un premier des axes de rotation ; fréquemment, les tubes sont tournants devant le dispositif et le bras est soumis à une rotation oscillante au moins autour du premier des axes de rotation, afin de bien suivre le fond du relief. Mais le dispositif peut aussi tourner autour de tubes fixes.

L'invention sera maintenant décrite en liaison aux figures, soit :
- la figure 1 est une vue générale du dispositif,
- la figure 2 est une représentation détaillée du système optique,
- la figure 3 est une variante de réalisation,
- la figure 4 et la figure 5 illustrent des applications de mesures par le dispositif.

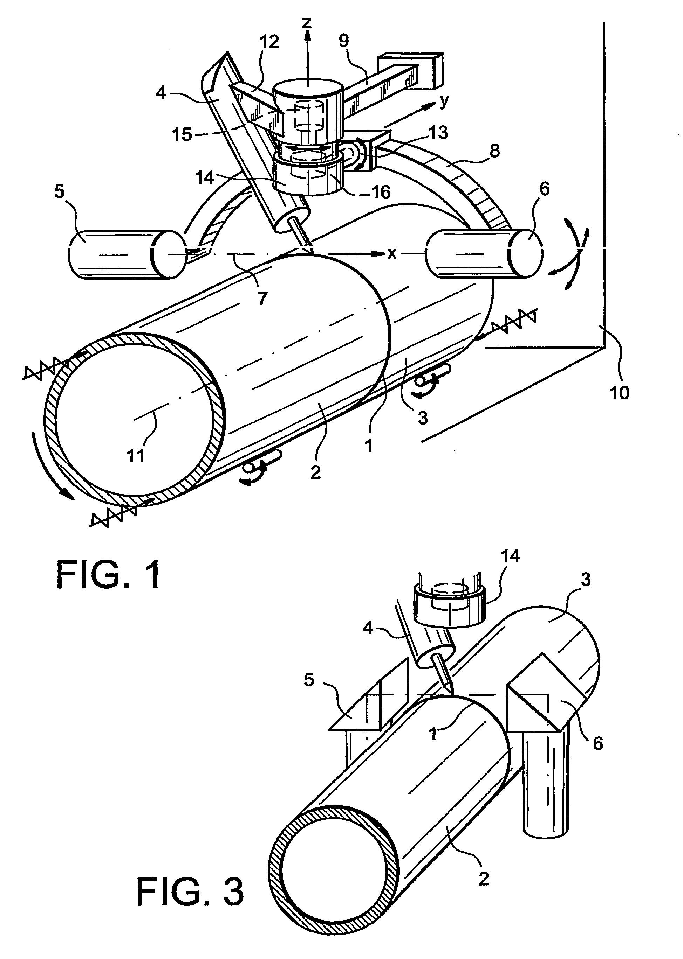

Le dispositif représenté à la figure 1 est destiné au contrôle du raccord 1 en ligne circulaire de deux tubes 2 et 3 joints bout à bout. Le raccord 1 est destiné à être soudé par un outil 4 accomplissant un procédé de soudage quelconque. Le dispositif de contrôle dont il est question ici comprend un émetteur 5 de lumière et un récepteur 6 de cette même lumière, alignés le long d'un trajet principal 7 de la lumière sensiblement tangent aux tubes 2 et 3 et éclairant la région du raccord 1 sur laquelle travaille l'outil 4, et qui sont soutenus aux extrémités d'un bras 8 courbe passant par-dessus les tubes 2 et 3. Le bras 8 est soutenu par un organe de support 9 fixé à une installation de soudage 10 non représentée en détail et qui comprend aussi des moyens, qui ne sont pas représentés davantage, de maintenir les tubes 2 et 3 en aboutement, tout en leur permettant de tourner autour de leur axe 11. L'outil 4 est relié à l'organe de support 9 par un support de liaison 12 rigide, et le bras 8 est relié à l'organe de support 9 par une articulation double composée d'une première articulation 13 d'axe y parallèle à l'axe 11 des tubes 2 et 3 et d'une seconde articulation 14 dont l'axe z est dirigé vers le raccord 1. Ces deux axes d'articulation sont tous deux perpendiculaires ou sensiblement perpendiculaires à la direction x du trajet principal de la lumière 7. Ainsi, une rotation autour de la première articulation 13 fait varier l'inclinaison du trajet principal 7 sur le raccord 1, et une rotation autour de la seconde articulation 14 fait varier l'angle du trajet principal 7 avec le plan du raccord 1. Les mouvements des articulations 13 et 14 sont commandés par des moteurs 15 et 16 qu'elles contiennent et qui servent aussi à les immobiliser à des positions voulues. La commande peut être faite par un observateur ou être automatique, par exemple si des balayages sont entrepris.

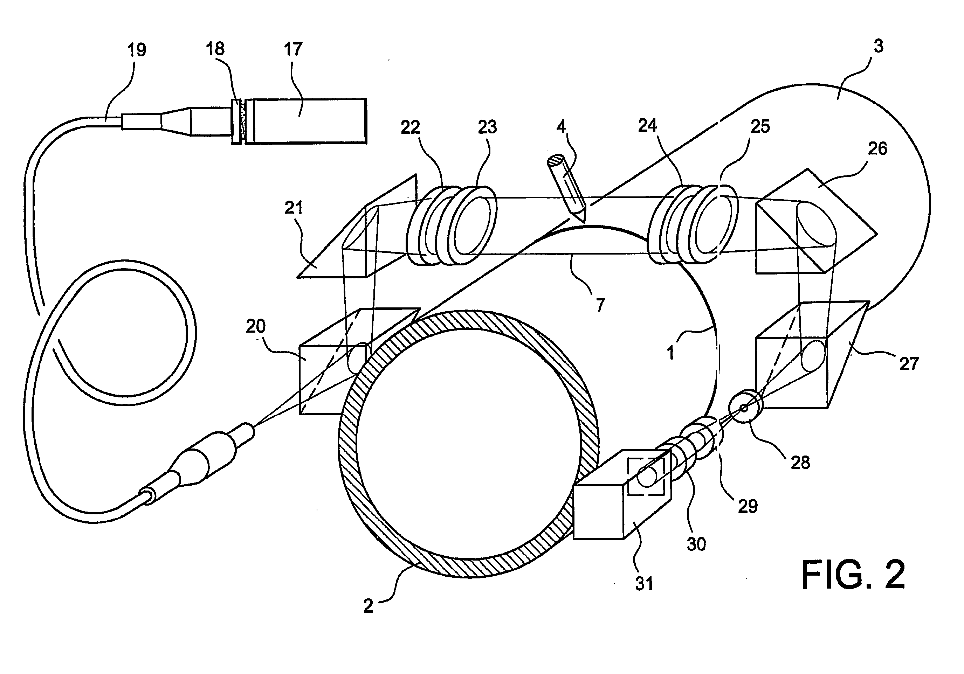

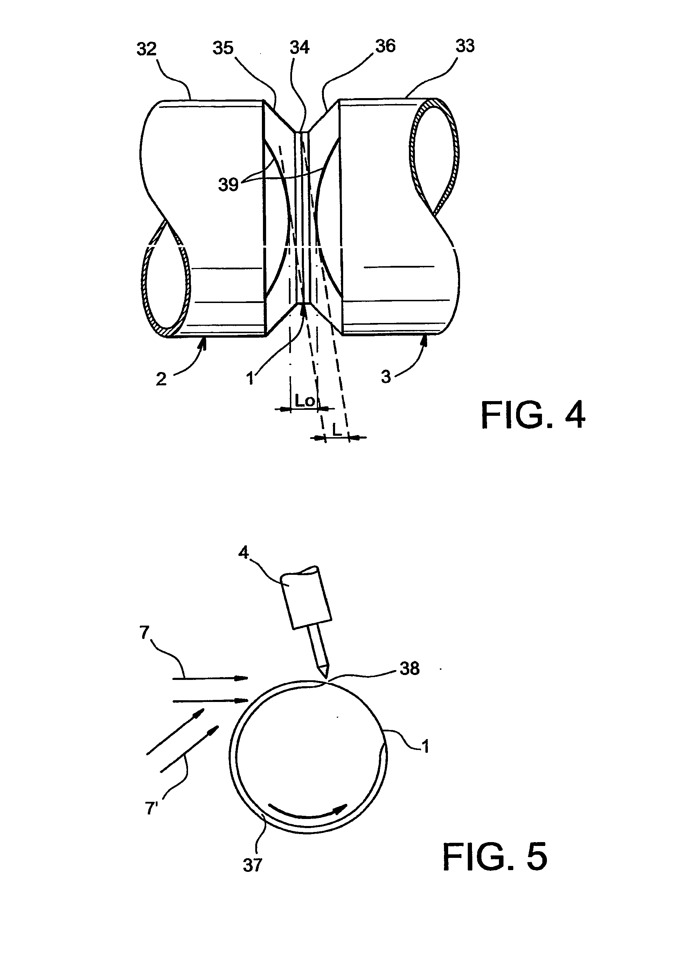

On passe maintenant à la figure 2 pour une description plus complète du système émetteur et récepteur de lumière. Celle-ci est produite par un laser 17 et transportée dans une fibre optique 19 par l'intermédiaire d'un coupleur de fibre 18. L'extrémité de la fibre 19 qui est opposée au laser 17 est fixée à l'extrémité du bras 8, alors que le reste de la fibre 19 et le laser 17 peuvent être fixes. La lumière sort de la fibre optique 19 en un faisceau légèrement divergent et se trouve renvoyée dans le trajet principal 7 après avoir franchi une paire de miroirs de renvoi 20 et 21 successifs, une lentille d'expansion 22 qui élargit le faisceau et le rend parallèle et un verre de protection 23. Après avoir éclairé une portion du raccord 1 et le bout de l'outil 4, la lumière atteint un second verre de protection 24, puis une lentille convergente 25, une seconde paire de miroirs de renvoi 26 et 27, un sténopé 28 placé à un foyer du faisceau rendu convergent par la lentille 25, une autre lentille 29 après le foyer, rendant le faisceau de nouveau parallèle, un filtre interférentiel ou un filtre passe-bande 30 et un détecteur 31 tel qu'une caméra d'observation. Les derniers moyens mentionnés, à compter du second verre de protection 24, appartiennent au récepteur 6, tandis que les premiers moyens appartiennent à l'émetteur 5. Ainsi qu'on l'a vu pour l'émetteur 5, certains des moyens du récepteur 6 peuvent être rendus fixes en utilisant un couplage à fibre optique. Les miroirs de renvoi 22, 23 et 26, 27 ne sont pas indispensables mais permettent de ne pas placer l'émetteur 5 et le récepteur 6 en alignement, avec un encombrement important dans la longueur du bras 8, mais de les replier contre l'alignement des tubes 2 et 3, soit parallèlement à l'axe 11, comme on l'a représenté à la figure 2, soit dans une direction verticale comme on le représente à la figure 3.

Une des propriétés de ce système optique est de dilater le faisceau lumineux émis par le laser 17 à une section relativement grande au trajet principal 7 pour qu'il illumine toute la scène à contrôler, puis de le rapetisser jusqu'au foyer du sténopé 28 dont la fonction est celle d'un filtre spatial arrêtant la plus grande partie de la lumière ambiante, qui sera ainsi inaperçue et ne troublera pas la perception des ombres formées par la lumière du laser. Le filtre interférentiel ou filtre passe-bande, 30 permet de ne retenir pour l'observation que les rayons lumineux à la longueur d'onde émise par le laser 17 et de supprimer encore une partie de la lumière ambiante. Une vision convenable de la scène à contrôler est ainsi obtenue par ces filtres, même en présence d'une lumière ambiante intense produite par un bain de fusion ou par le plasma ou les outillages portés à haute température par les sources de chaleur utilisées pour le soudage.

On passe maintenant à une description d'un procédé de contrôle.

La figure 4 représente un profil de raccordement qu'on peut observer dans l'application décrite ici, composé de génératrices 32 et 33 horizontales des tubes 2 et 3, d'une génératrice 34 horizontale du raccord 1 et de génératrices 35 et 36 obliques de chanfreins de forme conique. Des paramètres qu'on peut vouloir mesurer sont la distance verticale entre les génératrices horizontales 32, 33 et 34 ou la distance horizontale entre les génératrices 35 et 36, en fonction de la hauteur, c'est-à-dire la profondeur ou la largeur du raccord 1. La reconnaissance du profil dépend fortement de l'orientation du dispositif de contrôle et surtout du système optique. C'est ainsi que les intersections des chanfreins coniques avec des plans parallèles à l'axe des tubes sont des hyperboles 39. Comme le montre le schéma de la figure 4, la distance entre les chanfreins sera perçue avec une largeur L différente d'après l'orientation des rayons d'observation, la distance Lₒ la plus grande (correspondant à la distance réelle et qu'on voudrait mesurer) apparaissant quand l'observation est perpendiculaire à l'axe des cônes. C'est pourquoi il sera indiqué, au moins périodiquement, de faire parcourir des mouvements oscillants au système autour de la deuxième articulation 14, afin d'ajuster et de réajuster la direction de visée.

Il est de même manifeste que l'estimation de la profondeur du raccord 1 dépend de l'inclinaison de la direction de visée. Spécialement dans le cas d'un travail sur une ligne circulaire telle que le raccord 1, il sera indiqué de soumettre régulièrement le système optique à un mouvement oscillant autour de la première articulation 13. Cela est particulièrement nécessaire dans le cas d'un cordon de soudure qui s'établit en retrait de la surface primitive du raccord 1, comme l'illustre la figure 5, où la surface supérieure du cordon de soudure porte la référence 37. Le maintien d'un trajet principal 7 de la lumière à une inclinaison constante ne permettrait que de mesurer l'arête 38 du raccord 1 qui surplombe le bain de fusion. Des variations d'inclinaison périodique donnant un nouveau trajet principal 7' permettraient par contre de ne plus observer le raccordement 1 primitif, mais le cordon de soudure 37 lui-même et de donner donc un renseignement plus utile sur l'état de l'assemblage soudé.

Le laser peut être remplacé par une autre source lumineuse (notamment de type LED, diode électroluminescente). L'intérêt du laser est que son énergie lumineuse est concentrée dans une bande spectrale limitée permettant d'utiliser un filtre passe-bande étroit qui laisse passer la lumière de laser et atténue l'éclairement parasite qui couvre un spectre moins large. Une puissance d'ordre de quelques mW est alors suffisante. On choisit par ailleurs une longueur d'onde d'émission telle que le plasma soit transparent pour celle-ci. Avec une source caractérisée par un spectre d'émission plus large, une puissance lumineuse, plus importante est nécessaire pour obtenir le même niveau de contraste. Mais une faible puissance réduit la gêne ou les risques oculaires pour un observateur involontaire.

## Revendications

1. Dispositif de contrôle comprenant un organe de support (9), un émetteur de lumière (5), un récepteur (6) de la lumière de l'émetteur et un bras (8) à deux extrémités opposées duquel l'émetteur (5) et le récepteur (6) sont montés, **caractérisé en ce qu'**il comprend encore une articulation double et réglable (13, 14) par laquelle le bras est monté sur le support, l'articulation double comprenant deux axes de rotation (y, z) perpendiculaires entre eux et à un trajet principal (x) de la lumière entre l'émetteur et le récepteur.

2. Dispositif de contrôle selon la revendication 1, **caractérisé en ce qu'**il comprend un support (12) d'un outil (4), effectuant un travail contrôlé par le dispositif, sur l'organe de support (9).

3. Dispositif de contrôle selon la revendication 1 ou 2, **caractérisé en ce que** le bras (8) est courbe entre les extrémités.

4. Dispositif de contrôle selon l'une quelconque des revendications 1 à 3, **caractérisé en ce que** l'émetteur (5) et le récepteur (6) sont munis de dispositifs de renvoi d'angle (20, 21, 26, 27) pour la lumière et disposés parallèlement l'un à l'autre, et perpendiculairement au trajet principal (7) de la lumière.

5. Dispositif de contrôle selon l'une quelconque des revendications précédentes, **caractérisé en ce que** la lumière est monochromatique, et le récepteur comprend un filtre (30) transparent à la lumière et opaque à d'autres longueurs d'ondes lumineuses, une lentille convergente (25), et un sténopé (28) placé à un foyer de la lumière créé par la lentille.

6. Dispositif de contrôle selon l'une quelconque des revendications 1 à 4, **caractérisé en ce que** l'émetteur de lumière est une diode électroluminescente.

7. Procédé de contrôle d'une scène effectué avec le dispositif selon l'une quelconque des revendications précédentes, **caractérisé en ce qu'**il consiste à placer le dispositif de manière que le trajet principal (x) de la lumière soit tangent à la scène à contrôler, et à ajuster le bras en orientation par des réglages de l'articulation double.

8. Procédé de contrôle selon la revendication 7, **caractérisé en ce qu'**il est appliqué à une jonction (1) circulaire, notamment en relief, de tubes alignés (2, 3), les tubes étant orientés parallèlement à un premier (y) des axes de rotation.

9. Procédé de contrôle selon la revendication 8, **caractérisé en ce que** les tubes sont tournants, et le bras est soumis à une rotation périodique oscillante au moins autour du premier des axes de rotation.

## Claims

1. A monitoring device comprising a supporting member (9), a light emitter (5), a receiver (6) for the light of the emitter and an arm (8) with two opposite ends on which the source (5) and the receiver (6) are mounted, **characterized in that** it also comprises a double and adjustable joint (13, 14) through which the arm is mounted on the support, the double joint comprising two axes of rotation (y, z) perpendicular to each other and to a main path (x) of the light between the emitter and the receiver.

2. The monitoring device according to claim 1, **characterized in that** it comprises a support (12) for a tool (4) carrying out an operation monitored by the device, on the supporting member (9).

3. The monitoring device according to claim 1 or 2, **characterized in that** the arm (8) is curved between the ends.

4. The monitoring device according to any of claims 1 to 3, **characterized in that** the emitter (5) and the receiver (6) are provided with right-angle reflecting devices (20, 21, 26, 27) for light and positioned parallel to each other and perpendicularly to the main path (7) of the light.

5. The monitoring device according to any of the preceding claims, **characterized in that** the light is monochromatic, and the receiver comprises a filter (30) transparent to the light and opaque to other optical wavelengths, a converging lens (25) and pinhole (28) placed at a focus of the light created by the lens.

6. The monitoring device according to any of claims 1 to 4, **characterized in that** the light emitter is a light-emitting diode.

7. A method for monitoring a scene performed with the device according to any of the preceding claims, **characterized in that** it consists of placing the device so that the main path (x) of the light is tangent to the scene to be monitored and of adjusting the arm in orientation by adjustments of the double joint.

8. The monitoring method according to claim 7, **characterized in that** it is applied to a circular junction (1) notably in relief, of aligned tubes (2, 3), the tubes being oriented parallel to a first (y) of the axes of rotation.

9. The monitoring method according to claim 8, **characterized in that** the tubes are rotary, and the arm is subject to an oscillatory periodic rotation at least around the first of the axes of rotation.

## Patentansprüche

1. Kontrollvorrichtung, ein Tragorgan (9), einen Lichtsender (5), einen Empfänger (6) des Lichts des Senders und einen Arm (8) umfassend, an dessen beiden entgegengesetzten Enden der Sender (5) und der Empfänger (6) angebracht sind,
**dadurch gekennzeichnet, dass** sie ein doppeltes und regulierbares Gelenk (13, 14) umfasst, mit dem der Arm an den Träger montiert ist, wobei das doppelte Gelenk zwei Rotationsachsen (y, z) umfasst, die zueinander und zu einem Hauptweg (x) des Lichts zwischen dem Sender und dem Empfänger senkrecht sind.

2. Kontrollvorrichtung nach Anspruch 1, **dadurch gekennzeichnet, dass** sie an dem Tragorgan (9) einen Träger (12) eines Werkzeugs (4) umfasst, das eine durch die Vorrichtung kontrollierte Arbeit ausführt.

3. Kontrollvorrichtung nach einem der Ansprüche 1 oder 2, **dadurch gekennzeichnet, dass** der Arm (8) zwischen den Enden gebogen ist.

4. Kontrollvorrichtung nach einem der Ansprüche 1 bis 3, **dadurch gekennzeichnet, dass** der Sender (5) und der Empfänger (6) mit Winkelreflexions- bzw. Winkelspiegeleinrichtungen (20, 21, 26, 27) für das Licht ausgerüstet sind, die parallel zueinander und senkrecht zu dem Hauptweg (7) des Lichts angeordnet sind.

5. Kontrollvorrichtung nach einem der vorangehenden Ansprüche, **dadurch gekennzeichnet, dass** das Licht monochromatisch ist und der Empfänger einen für das Licht durchlässigen und für andere Lichtwellenlängen undurchlässigen Filter (30), eine Konvergenzlinse (25) und eine Lochblende (28) umfasst, die auf einem durch die Linse generierten Brennpunkt des Lichts platziert ist.

6. Kontrollvorrichtung nach einem der Ansprüche 1 bis 4, **dadurch gekennzeichnet, dass** der Lichtsender eine Elektrolumineszenzdiode ist.

7. Verfahren zur Kontrolle einer Szene mittels einer Vorrichtung nach einem der vorangehenden Ansprüche, **dadurch gekennzeichnet, dass** es darin besteht, die Vorrichtung so zu platzieren, dass der Hauptweg (x) des Lichts die zu kontrollierende Szene tangiert, und darin, die Orientierung des Arms durch Regulierungen des doppelten Gelenks zu justieren.

8. Kontrollverfahren nach Anspruch 7, **dadurch gekennzeichnet, dass** es bei einer kreisförmigen, insbesondere reliefartigen Verbindung (1) zweier fluchtenden Rohre (2, 3) angewendet wird, wobei die Rohre parallel sind zu der ersten Rotationsachse (y).

9. Kontrollverfahren nach Anspruch 8, **dadurch gekennzeichnet, dass** die Rohre sich drehen und der Arm eine oszillierende periodische Rotationsbewegung zumindest um die erste Rotationsachse ausführt.
